(19) **Europäisches Patentamt**

**European Patent Office**

**Office européen des brevets**

(11) **EP 1 116 150 B1**

(12) **FASCICULE DE BREVET EUROPEEN**

(45) Date de publication et mention
de la délivrance du brevet:
**04.06.2003 Bulletin 2003/23**

(51) Int Cl.$^7$: **G06F 17/60**

(21) Numéro de dépôt: **99946223.7**

(86) Numéro de dépôt international:
**PCT/FR99/02254**

(22) Date de dépôt: **22.09.1999**

(87) Numéro de publication internationale:
**WO 00/017790 (30.03.2000 Gazette 2000/13)**

(54) **PROCEDE ET SYSTEME MULTIDIMENSIONNEL DE MAITRISE STATISTIQUE DES PROCESSUS**

MULTIDIMENSIONALES VERFAHREN UND SYSTEM FÜR STATISTISCHE PROZESSTEUERUNG

METHOD AND MULTIDIMENSIONAL SYSTEM FOR STATISTICAL PROCESS CONTROL

(84) Etats contractants désignés:
**AT BE CH CY DE DK ES FI FR GB GR IE IT LI LU MC NL PT SE**

(30) Priorité: **22.09.1998 FR 9812113**

(43) Date de publication de la demande:
**18.07.2001 Bulletin 2001/29**

(73) Titulaire: **Lafaye de Micheaux, Daniel**
**30250 Aubais (FR)**

(72) Inventeur: **Lafaye de Micheaux, Daniel**
**30250 Aubais (FR)**

(74) Mandataire: **Domange, Maxime**
**Cabinet Beau de Lomenie,**
**232, avenue du Prado**
**13295 Marseille Cedex 08 (FR)**

(56) Documents cités:
**EP-A- 0 660 211**

• ZHANG JIE ET AL: "Fault detection and classification through multivariate statistical techniques" PROCEEDINGS OF THE 1995 AMERICAN CONTROL CONFERENCE. PART 1 (OF 6);SEATTLE, WA, USA JUN 21-23 1995, vol. 1, 1995, pages 751-755, XP002107815 Proc Am Control Conf;Proceedings of the American Control Conference 1995
• RUNGER G C ET AL: "Multivariate and univariate process control: geometry and shift directions" QUALITY AND RELIABILITY ENGINEERING INTERNATIONAL, MAY-JUNE 1997, WILEY, UK, vol. 13, no. 3, pages 153-158, XP002107816 ISSN 0748-8017

• MILANESE R ET AL: "Correspondence analysis and hierarchical indexing for content-based image retrieval" PROCEEDINGS. INTERNATIONAL CONFERENCE ON IMAGE PROCESSING (CAT. NO.96CH35919), PROCEEDINGS OF 3RD IEEE INTERNATIONAL CONFERENCE ON IMAGE PROCESSING, LAUSANNE, SWITZERLAND, 16-19 SEPT. 1996, pages 859-862 vol.3, XP002107817 ISBN 0-7803-3259-8, 1996, New York, NY, USA, IEEE, USA
• DATABASE INSPEC [Online] INSTITUTE OF ELECTRICAL ENGINEERS, STEVENAGE, GB Inspec No. 4831927, SCIUTTO S J: "Study of the shape of random walks" XP002107819 & JOURNAL OF PHYSICS A (MATHEMATICAL AND GENERAL), 7 NOV. 1994, UK, vol. 27, no. 21, pages 7015-7034, ISSN 0305-4470
• KOURTI T ET AL: "Process analysis, monitoring and diagnosis, using multivariate projection methods" CHEMOMETRICS AND INTELLIGENT LABORATORY SYSTEMS, vol. 28, no. 1, 1 avril 1995 (1995-04-01), page 3-21 XP004037912
• CUELLAR J: "Statistical process control for nonnormally distributed variables through the use of transformations" IEEE/SEMI ADVANCED SEMICONDUCTOR MANUFACTURING CONFERENCE AND WORKSHOP (CAT. NO.91CH3042-9), BOSTON, MA, USA, 21-23 OCT. 1991, pages 143-148, XP002107818 ISBN 0-7803-0152-8, 1991, New York, NY, USA, IEEE, USA

**Description**

La présente invention concerne un procédé et tout système utilisant un tel procédé de maîtrise statistique des processus basé sur des traitements multidimensionnels de données.

Son objectif est, d'une part de déclencher une alerte lorsque le processus s'écarte du fonctionnement "normal", qui assure la qualité requise de sa production, d'autre part, de proposer une identification de la ou les causes probables de l'anomalie.

La Maîtrise Statistique des Processus (MSP, traduction française de la SPC, Statistical Process Control) est actuellement utilisée dans un très grand nombre d'entreprises, dans tous les pays (principalement les pays industrialisés), pour tout type de production industrielle : industrie mécanique, électronique, chimique, pharmaceutique, agro-alimentaire, industrie des matières plastiques, ...

Son but est d'assurer la qualité des produits en contrôlant le processus de fabrication lui-même et non plus les seules caractéristiques des produits. La MSP devient indispensable pour atteindre le "zéro défaut" et lorsque l'entreprise désire satisfaire aux normes internationales d'assurance qualité (ISO 9000).

Son objectif technique est de détecter les éventuelles dérives du processus de fabrication et d'y porter remède avant que des produits non conformes ne soient fabriqués.

L'utilisation de cette méthode déborde maintenant le cadre de la fabrication de biens matériels pour s'étendre à la production de services (banque, assurance, bureau d'études, ...)

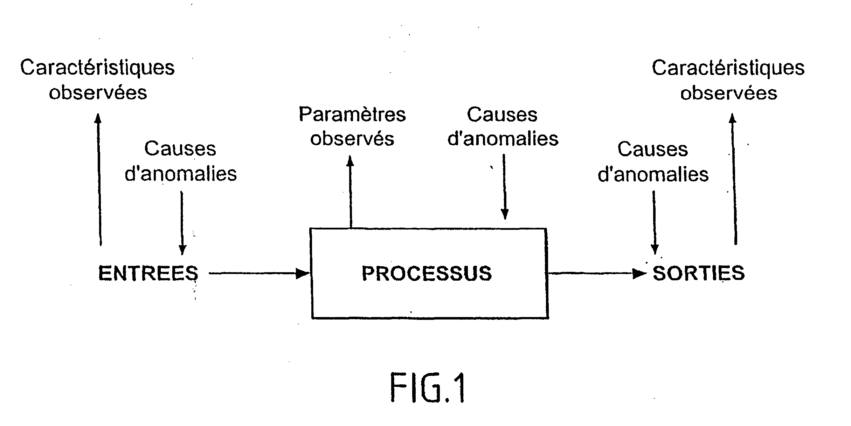

Dans la pratique du pilotage de processus (cf. figure 1), on est conduit à suivre plusieurs mesures (indicateurs) associées au même processus : caractéristiques des entrées (matières premières), caractéristiques des sorties (produits), paramètres de fonctionnement du processus. Chaque unité d'observation (instant de mesure ou élément produit) est ainsi associée à plusieurs valeurs numériques obtenues par les mesures, elle peut être ainsi repérée par un point dans l'espace multidimensionnel des mesures relevées.

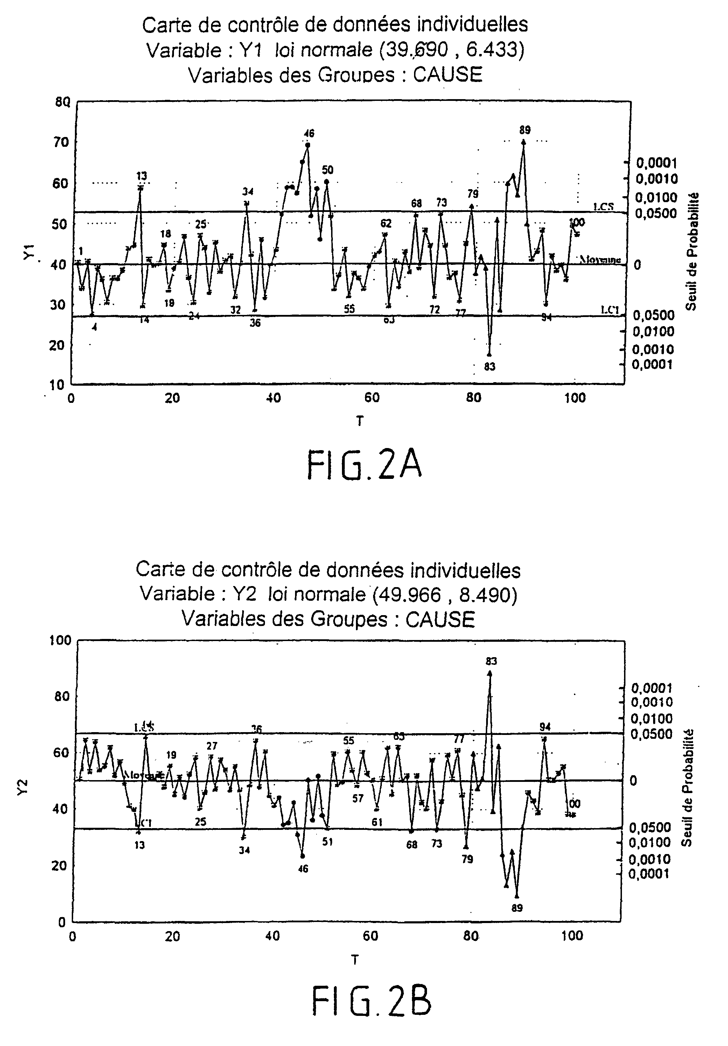

La pratique habituelle de MSP consiste à surveiller le processus par le suivi de plusieurs cartes de contrôle, qui est la représentation graphique de l'évolution de la grandeur observée et présentant des limites de contrôle prédéfinies (voir figure 2) une par mesure. Chaque carte de contrôle est alors interprétée indépendamment des autres, déclenchant des alertes indépendamment.

On peut choisir parmi plusieurs types de cartes de contrôle (appelées "Shewart, CuSum, EWMA, MME"), les trois dernières sont reconnues comme étant plus aptes à détecter de "petits déréglages" que la première.

Généralement on utilise des cartes de contrôle de données groupées: en reportant les moyennes de plusieurs mesures regroupées, on obtient une meilleure détection de faible déréglage, de plus, la distribution des valeurs est plus conforme à l'hypothèse de normalité sous jacente à la méthode. En reportant les variances ou les étendues de chaque groupe, on peut détecter une augmentation de la variabilité des mesures ayant une cause spéciale. Dans les articles de ZHANG JIE et al «Pault detection and classification through multivariate statistical techniques » PROCEEDINGS OF THE 1995 AMERICAN CONTROL CONFERENCE PART 1 (OF 6); SEATTLE, WA, USA JUN 21-23 1995, vol 1, 1995, pages 751-755, Proceedings of the American Control Conference 1995, et RUNGER G C et al "multivariate and univariate process control: geometry and shift directions" QUALITY AND RELIABILITY ENGINEERING INTERNATIONAL, MAY-June 1997, WILEY, UK, vol. 13, no. 3, pages 153-158, ISSN 0748-8017, il est décrit un procédé de maîtrise statistique de processus industriel à partir de relevés d'indicateurs ou de mesures de grandeurs caractéristiques des paramètres de contrôle et de fonctionnement dudit processus.

La pratique habituelle consistant à surveiller simultanément et indépendamment plusieurs cartes de contrôle constitue une méthode maladroite et peu efficace de MSP multidimensionnelle :

- elle crée trop de fausses alertes qui peuvent entraîner des corrections intempestives ; celles-ci devront être rapidement remises en question, et conduiront à un pilotage chaotique et coûteux en corrections multiples ;
- elle peut détecter trop tard des anomalies réelles ;
- elle identifie difficilement les causes d'anomalies qui ne sont pas directement liées à une mesure. Ceci incite à une multiplication coûteuse de mesures et de cartes de contrôle.

Le procédé et système objet de la présente invention s'applique à pallier ces inconvénients : il s'agit d'un procédé de maîtrise statistique de processus à partir de relevé d'indicateurs ou de mesures sur les entrées, les sorties et les paramètres de contrôle et de fonctionnement dudit processus, et qui peuvent être représentés par des points observations dans des repères liant leur valeur à leur indice d'échantillonnage ; selon l'invention :

    a) on transforme les valeurs observées de sorte que les valeurs obtenues soient compatibles avec le modèle de distribution gaussienne multidimensionnelle, et constituent les données correspondant aux points d'observation utilisées dans la suite du procédé,

    b) on situe lesdits points observations dans un espace multidimensionnel, chaque dimension étant associée à une grandeur mesurée,

    c) parmi les points observations, on distingue ceux dits sous contrôle correspondant au fonctionnement correct du processus, de ceux dits hors contrôle ;

d) on calcule le centre de la distribution des points sous contrôle comme étant le centre de gravité des points observations sous contrôle;

e) on relève les points observations hors contrôle qui se concentrent dans une direction particulière à partir du centre de la distribution des points sous contrôle ;

f) on associe cette direction à une même cause de déréglage dudit processus,

g) on associe à chaque couple point observation / direction d'anomalie des indicateurs dans le but de proposer zéro, une ou plusieurs causes d'anomalie susceptibles de concerner l'observation faite, et

h) en cas d'anomalie ainsi analysée, on déclenche une alerte et on porte remède aux dérives ainsi détectées dans le processus industriel.

Ledit centre de gravité des points observations sous contrôle correspond à un point ayant pour composante les moyennes des composantes des points observations sous contrôle.

Le contrôle MSP consiste d'une manière connue à observer régulièrement, de façon systématique ou par échantillonnage p grandeurs continues $y^1$, $y^2$, ... , $y^P$. Ces grandeurs peuvent représenter indifféremment des caractéristiques de matières premières, des caractéristique de produits fabriqués ou des paramètres de fonctionnement du processus de fabrication. On note $\underline{y}$ le vecteur de dimension p formé de ces p mesures à un « instant » donné et nous l'appellerons vecteur observation du processus, le point d'extrémité de ce vecteur étant le point observation du processus et l'origine du vecteur étant l'origine du repère considéré.

Il est clair que la notion d'« instant » ici dépasse une interprétation strictement temporelle : des mesures associées au même « instant » sont, lorsque cela est possible, des mesures de paramètres relatifs à la production d'une même unité ou d'un même lot fabriqué. Une parfaite traçabilité du processus de fabrication est alors nécessaire pour permettre de définir les mesures associées au même « instant ».

Lorsque le processus est « sous contrôle », les valeurs de $\underline{y}$, aux différents instants successifs to , to+1, to+2, ... varient « faiblement » autour d'une valeur $\underline{y}0$ , cible souhaitée pour assurer une production de qualité satisfaisante. Ces variations sont dues à des variations aléatoires de caractéristiques des matières premières (dureté du matériau, composition chimique d'un composant, fournisseur,...), de l'environnement (température, humidité,...,) ou du processus (réglage d'un appareil, attention d'opérateur,...). Ces caractéristiques qui ont une influence sur une ou plusieurs composantes de $\underline{y}$ seront notées $z^1$, $z^1$, ... , $z^m$ et forment ensemble un vecteur noté $\underline{z}$. Nous appellerons $\underline{z}$ vecteur explicatif du processus.

Pour qu'une caractéristique du processus soit considérée comme "variable observation" du processus $y^i$ il faut qu'elle soit évaluée à chaque « instant ».

Pour qu'une caractéristique du processus ou des entrées soit considérée comme "variable cause" $z^k$ du processus il faut qu'elle soit modifiée par un acteur extérieur au système proprement dit : action humaine volontaire ou non, variation d'environnement, usure ou vieillissement. Généralement ces variables ne sont pas mesurées à chaque "instant" (sinon elles apparaissent également comme variables $y^j$) pour des raisons économiques ou de faisabilité, elles sont en ce sens des "variables cachées" influant sur le comportement du processus. Leur évaluation est souvent coûteuse, longue, imprécise, elle n'est opérée qu'en cas d'anomalie.

Une variable peut être quantitative si les valeurs possibles sont numériques et appartiennent à un intervalle continu de valeurs (température, pression, ...), elle peut être qualitative lorsque les valeurs possibles, numériques ou non, sont en nombre limité (fournisseur, opérateur, appareil...). Les modèles et méthodes considérés dans la présente invention supposent que les composantes de $\underline{y}$ sont toutes quantitatives.

Une même caractéristique du processus (température maîtrisée d'un four par exemple) peut apparaître à la fois comme composante de $\underline{z}$ et de $\underline{y}$.

On peut modéliser la dépendance entre $\underline{y}$ et $\underline{z}$ par la relation

$$\underline{y} = \underline{f}(\underline{z},t) + \underline{\varepsilon}$$

où t désigne l'instant d'observation et $\underline{\varepsilon}$ un vecteur aléatoire de dimension p que l'on supposera de moyenne nulle et de matrice de covariance $\Sigma_\varepsilon$ . $\underline{f}$ est une fonction vectorielle qui admet p composantes $f^1$ , $f^2$ , ..., $f^P$ telles que $y^j = f^j ( \underline{z}, t) + \underline{\varepsilon}$.

Les composantes de $\underline{y}$ sont corrélées entre elles de même que les composantes de $\underline{z}$.

Un processus parfaitement stabilisé en régime permanent devrait présenter les aspects suivants :

$f ( \underline{z}, t )$ ne dépend pas en fait de t
chaque "variable cause" $z^k$ est stabilisée à une valeur fixée $z_0^k$
$\underline{y}$ peut être modélisé par un processus stationnaire de la forme

$$\underline{y} = \underline{f}(\underline{z}_0) + \underline{\varepsilon}$$

Dans la réalité, il n'est pas possible de fixer parfaitement les variables causes quantitatives : il s'ajoute à la variable $\underline{z}_0$ une erreur aléatoire $\underline{e}$ d'espérance nulle et de matrice de covariance $\Sigma e$. Le modèle devient alors

$$z^k = z_0{}^k + e^k$$

$$\underline{y} = \underline{f}(\underline{z}_0 + \underline{e}) + \underline{\varepsilon}$$

Le procédé proposé suivant l'invention se place dans le contexte suivant qui est le contexte habituel de la MSP :

- la fonction $\underline{f}$ est inconnue
- les variables explicatives $z^k$ ne sont pas toutes identifiées
- on a effectué n observations des variables $y^1$, ..., $y^P$ aux "instants" t=1, ..., t=n.

Ces observations sont disposées sous la forme d'une matrice Y à n lignes et p colonnes. On désigne par $\underline{y}^j$ la j-ème colonne de Y; le i-ème élément de cette colonne noté $y^j_i$ désigne l'observation faite à l'instant t = i de la variable $y^j$. On désigne par $\underline{y}_i$ le vecteur des observations des variables $y^1$, ..., $y^P$ à "l'instant" t = i.

L'observation $\underline{y}_i$ est affectée d'un poids $P^i$, généralement égal à 1/n. On désigne par $D_p$ la matrice diagonale (n , n) admettant les poids $p_i$ comme termes diagonaux.

- quand le processus est bien maîtrisé

  * il est correctement centré sur la valeur cible $\underline{y0}$. $\underline{y0}$ est alors égale à l'espérance mathématique $E[\underline{y}]$ de $\underline{y}$ ; $\underline{y0}$ est donc très proche de la valeur moyenne observée $\underline{m}_y$ ( $\underline{m}_y$ désigne le vecteur constitué par les moyennes $\bar{y}^1$ ,...,$\bar{y}^p$ des p colonnes $\underline{y}^1$ , , $\underline{y}^P$ de la matrice Y).

  * sa variabilité est constante et compatible avec les limites de spécifications définies sur les différentes variables $y^j$, la matrice de covariances du vecteur aléatoires $\underline{y}$ ne varie pas dans le temps.

- quand le processus se dérègle, les valeurs observées $\underline{y}_i$ s'éloignent trop de la valeur cible $\underline{y0}$ . Un tel comportement peut provenir

  * d'une variation dans le temps de la valeur centrale d'une ou plusieurs variables cause $z^k$
  * d'une augmentation dans le temps de la variance d'un ou plusieurs aléas $\varepsilon^k$ ou $e^j$.

Si le déréglage est de nature qualitative sur la variable cause $z^k$, faisant passer cette variable de la valeur $z0^k$ à la valeur $z1^k$ le centre de la distribution est déplacée de $\underline{y0}$ à $\underline{y1}$ .Les points observés sont alors déplacés dans la direction $\underline{y1}$ -$\underline{y0}$ .

Si le déréglage est de nature quantitative sur $z^k$ et que le processus n'est pas instable autour de

$\underline{y0}$ relativement à $z^k$, alors on peut admettre que chaque fonction $f^j$ admet une dérivée partielle $f^{jk}$ par rapport à $z^k$. Le calcul des variations montre qu'alors, au premier ordre :

- un déréglage sur la moyenne, $z1^k = z0^k + d$, impliquera que le centre des points observés se déplacera depuis de $\underline{y0}$ dans la direction définie par le vecteur des dérivées partielles ( $f^{1k}(\underline{y0})$, ..., $f^{jk}$ $(\underline{y0}, ... , f^{Pk}(\underline{y0})$ );

- une augmentation de la variabilité de l'aléa $e^k$ se traduira par un "étirement" de la distribution des points observés $\underline{y}_i$ dans la même direction

$$( f^{1k}(\underline{y0}),... ,f^{j}k(\underline{y0}),..., f^{pk}(\underline{y0})$$

- une augmentation de la variabilité de l'aléa $e^j$ se traduira par un "étirement" de la distribution des points observés $\underline{y}_i$ dans la direction du jème vecteur de base

$$( \ 0 \ , \ ... \ ,0 \ , \ 1, \ 0, \ ... \ , \ 0 \ )$$
$$\quad 1 \qquad\qquad j \qquad\qquad p$$

Le procédé suivant la présente invention propose et permet d'atteindre les objectifs techniques suivants :

* dans une phase d'analyse d'historique :

  repérer les directions associées à des déréglages qui peuvent être identifiés sur cet historique et de définir les paramètres qui permettent de calculer, pour chaque observation, des indicateurs de proximité de ces directions.

* dans la phase opérationnelle de contrôle de processus :

  détecter si la dernière observation rend compte d'une dérive du fonctionnement du processus puis, par examen des indicateurs de proximités, identifier de quelles directions de causes identifiées le point observé paraît "proche" et ainsi proposer la ou les causes probables du déréglage.

* proposer pour ces deux phases des graphiques permettant une évaluation rapide et synthétique de la situation.

Afin d'adapter le système aux particularités de chaque processus, il est proposé plusieurs versions de chaque traitement du système.

La présente invention propose un procédé et tout système utilisant un tel procédé de Maîtrise Statistique de Processus comprenant à partir de relevés d'indicateurs ou de mesures sur les entrées, les sorties, les paramètres de contrôle et de fonctionnement dudit processus, divers traitements sur les valeurs ainsi relevées : il fonctionne de préférence grâce à un ordinateur suivant un traitement informatique, et selon l'étape du traitement, de façon totalement automatique ou en assistant de l'utilisateur.

Son fonctionnement est en deux phases :

• Une phase d'apprentissage et d'analyse d'historique de processus ; cet historique est formé d'un ensemble de grandeurs associées au fonctionnement du processus ; ces grandeurs sont mesurées ou évaluées à des instants successifs ou sur des pièces désignées par échantillonnage.

L'objectif de cette analyse est

- d'identifier

  * les instants à partir desquels un dérèglement du procédé se manifeste
  * le ou les causes spéciales des dérèglements constatés (par un échange d'informations avec l'utilisateur spécialiste du processus réel étudié).

- d'évaluer les valeurs des paramètres qui définissent les directions attachées à chaque cause spéciale identifiée

  • Une phase de suivi du processus.

Au cours de cette phase, le système reçoit les mesures et données en provenance du processus (depuis des capteurs par liaison directe, ou par saisie manuelle). Il permet alors le déclenchement d'alertes lorsque le processus se dérègle. Les grandeurs attachées à chaque cause étant évaluées pour cette observation, il précise alors la ou les causes probables du dérèglement, causes choisies parmi celles qui ont été préalablement identifiées par la méthode d'analyse. Si aucune cause n'est proposée, l'identification de la cause fait alors intervenir l'examen humain du processus réel ; la nouvelle cause identifiée est alors intégrée au système pour permettre son identification automatique si elle se reproduit ultérieurement.

La pertinence et l'originalité du système objet de la présente invention proviennent

* de la justesse du modèle proposé et de l'étendue de ses applications;
* des propriétés de la trace d'une anomalie dans l'espace multidimensionnel des grandeurs observées ; droite dans l'espace $R^n$ des observations ;

* de la définition de grandeurs synthétiques caractéristiques de chaque cause répertoriée et des lois de probabilité attachées : "intensité de cause" et "proximité angulaire" ;
* des méthodes d'analyse statistiques multidimensionnelles, puissantes et adaptées à ce modèle qui sont utilisées : classification des points hors contrôle, détermination des directions de causes;
* de la pertinence des représentations graphiques proposées : cartes de contrôle graduées en seuils de probabilité.
* La phase d'apprentissage contribue, par l'analyse de l'historique du processus, à l'identification des cas d'anomalies à l'aide des étapes suivantes :

  A1- Transformation préalable des données
  A2- Séparation des mesures sous contrôle et hors contrôle.
  A3- Identification des types de causes spéciales et des paramètres des directions associées.
  A4- Création et examen de cartes de contrôle sur les indicateurs de causes spéciales.
  A5- Interprétation des causes spéciales.

Ces étapes sont réalisées en interaction avec des spécialistes du processus réel qui peuvent intervenir pour introduire de nouvelles informations dans le système (observations reconnues hors contrôle, association de plusieurs causes, mesures suspectes, ...) et tirer parti des informations partielles fournies par le système pour affiner leur interprétation de l'historique. Des résultats obtenus à une étape permettront souvent de reprendre une ou des étapes antérieures en modifiant des options ou certains paramètres.

L'historique d'un processus est caractérisé par la matrice Y ayant n lignes et p colonnes. L'élément $y^j_i$ , situé à l'intersection de la ligne i et de la colonne j, représente la valeur prise par la variable $y^j$, lors de l'observation à "l'instant" i.

### Etape A1 : Transformation préalable des données

Il s'agit de transformer les données brutes observées $y^j_i$; pour que les valeurs sur lesquelles seront appliqués les traitements soient plus conformes au modèle sous-jacent à la méthode qui a été décrite plus haut et d'augmenter la pertinence des résultats.

Les transformations les plus généralement utiles sont faites séparément sur chaque variable observée, transformant valeur brute de l'observation $y^j_i$ en la nouvelle valeur $\bar{y}^j_i$. On peut citer les transformations suivantes qui ne sont pas exclusives :

* Le regroupement de données successives sous forme d'une seule donnée moyenne. (cf. cartes de contrôle de données groupées) . Par exemple :

$$\tilde{y}_h^j = \frac{1}{w} \sum_{s=1}^{w} y_{(h-1).w+s}^j$$

, où w est la taille de chaque groupe

\*    La différence entre mesures successives afin de décorréler les mesures

$$\tilde{y}_i^j = y_i^j - y_{i-1}^j$$

\*    les transformations donnant une distribution plus "proche" de la distribution gaussienne. Par exemple :

$$\tilde{y}_j^j = F_G^{-1}\left( F_{y^j} (y_i^j) \right)$$

où $F_G^{-1}$ est la fonction inverse de la fonction de répartition de la distribution gaussienne , $F_{y^j}$ est la fonction supposée de répartition de la variable $y^j$.

\*    les centrages sur les centres présumés des variations aléatoires; alors

$$\tilde{y}_i^j = y_i^j - c_i^j$$

Le choix de la valeur centrale $c_i^j$ dépend des situations concrètes, des connaissances que l'on a sur le processus. Ainsi ce peut être :

$c_i^j$ = moyenne des observations sous contrôle de la variable $y^j$.
$c_i^j$ = cible $y0^j$ la variable $y^j$, constante dans le temps
$c_i^j$ = cible $y0_i^j$ la variable $y^j$, qui varie dans le temps ( cas des petites séries, cas de variations connues et tolérées, ...)

\*    les transformations d'échelles, pour homogénéiser les échelles de grandeurs hétérogènes ou pour tenir compte du niveau d'importance que l'on octroie a priori à la variabilité des mesures observées :

$$\tilde{y}_i^j = y_i^j / s_i^j$$

où $s_i^j$ désigne l'unité choisie pour cette mesure,

par exemple :

$s_i^j$= écart type de la variable $y^j$ pour les observations sous contrôle.

### Etape A2 : Séparation des mesures sous contrôle et hors contrôle

Il s'agit de distinguer, parmi les observations de l'historique, celles qui ne correspondaient pas à un fonctionnement normal, sous contrôle du processus.
On étiquette d'abord comme étant hors contrôle les observations qui sont reconnues hors contrôle par les responsables du processus.
Sur les observations encore susceptibles d'être sous contrôle, on construit une carte du $T^2$ de Hotelling (voir l'ouvrage de Douglas C. Montgomery intitulé "Introduction to Statistical Quality Control", seconde édition, édité chez Wiley en 1991). On déclare alors hors contrôle les observations situées au-delà de la limite de contrôle supérieure associée au seuil $\alpha$. $\alpha$ désigne la probabilité de fausses alertes tolérées. La valeur choisie pour $\alpha$ est généralement 0,05 ou 0,001.
Il convient de répéter cette étape : à chaque itération, on désigne de nouvelles observations comme étant hors contrôle.
L'itération est arrêtée lors que le nombre d'observations qui apparaissent hors des limites de contrôle de la carte du $T^2$ est compatible avec la probabilité $\alpha$ de fausses alertes tolérées.
Cette compatibilité est évaluée par un test d'hypothèse classique : au vu de la fréquence observée des valeurs hors limites, on teste l'hypothèse d'avoir une probabilité de mesure hors limite inférieure ou égale à $\alpha$ (voir l'ouvrage de G. Saporta, "Probabilité, analyse des données et statistique", édition Technip, 1990).

### A3- Identification des types de causes spéciales et des paramètres des directions associées.

Pour chaque observation de l'historique étiquetée hors contrôle par l'étape précédente, on cherche à associer une cause d'anomalie bien identifiée appelée aussi "cause spéciale".
Cette identification doit être menée en utilisant la connaissance des responsables du processus. Cependant, une méthode de classification automatique bien adaptée, appliquée aux points reconnus hors contrôle, peut guider les responsables du processus : une telle classification regroupe les observations qui sont susceptibles de correspondre à la même cause d'anomalie, c'est-à-dire regroupe les points observations proches d'une même direction dans l'espace multidimensionnel.
Une méthode adaptée à cet objectif est la méthode de classification automatique de type classification ascendante hiérarchique admettant la valeur absolue du cosinus comme indice de similarité entre deux vecteurs observations et admettant le critère du lien maximum, appelé aussi critère du diamètre, pour diriger l'agrégation de groupes (voir l'ouvrage de G. Saporta cité plus haut). La classification porte alors sur des mesures hors contrôle qui sont centrées sur le centre de la distribution des données sous contrôle.

Une direction d'anomalie peut être plus facilement interprétée si l'on détermine les mesures les plus concernées par cette anomalie.

Pour ce faire, on effectue une régression linéaire, sans terme constant, de type "pas à pas" ou "meilleurs sous ensembles" en prenant la direction d'anomalie comme variable à expliquer et les variables mesurées, après transformation et centrage sur le centre de distribution sous contrôle, comme variables explicatives.

L'examen des variables ainsi sélectionnées et des signes des coefficients de régression obtenus, guidera les responsables du processus dans la détermination de l'origine de l'anomalie.

### A4- Création et examen de cartes de contrôle sur les indicateurs de causes spéciales.

A l'issu de l'étape précédente on dispose de plusieurs groupes de points observations hors contrôle, chaque groupe étant associé à une anomalie particulière ou "cause spéciale".

A chaque cause spéciale, cette étape associe tout d'abord sa direction privilégiée dont l'existence a été mentionnée plus haut, puis deux fonctions indicateurs. Les deux indicateurs sont des fonctions qui, appliquées à une observation quelconque, indique si cette observation est susceptible de relever d'un fonctionnement anormal du processus ayant cette cause spéciale.

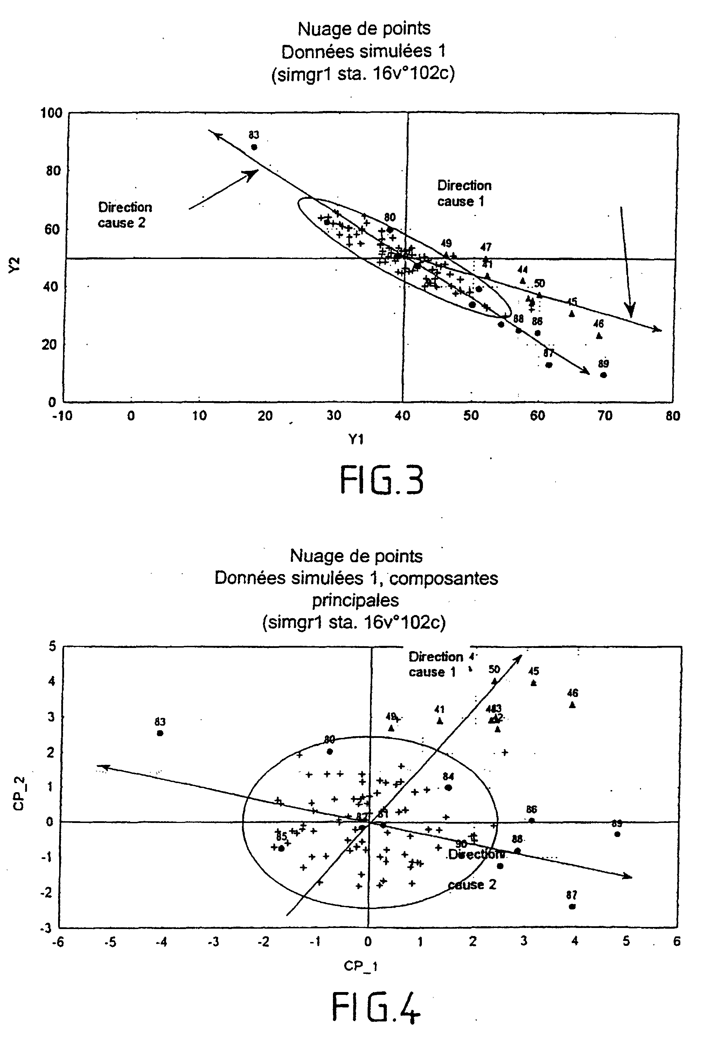

Les figures 3 et 4 illustrent, en dimension 2, les directions associées à deux anomalies différentes, la figure 3 illustre la situation dans l'espace des observations données en valeurs brutes, la figure 4 présente la situation dans le repère des composantes principales normées des données sous contrôle. On voit que la séparation entre les deux types d'anomalie est plus marquée sur la figure 4 que sur la figure 3.

Les points observations que l'on considère désormais se trouve dans le repère des composantes principales normées des mesures sous contrôle, l'origine coïncide donc avec le centre de la distribution des données sous contrôle.

Le modèle théorique présenté plus haut conduit à chercher la direction représentative d'une anomalie comme étant issue du centre de la distribution des observations sous-contrôle et "proche" de l'ensemble des points observations qui relèvent de cette anomalie. Cette direction peut être définie comme le premier axe d'inertie des points observations associés à ladite anomalie, axe passant par l'origine (cf. la transformation mentionnée plus haut). On sait qu'un tel axe est le premier axe principal déterminé par l'analyse en composantes principales, non centrée et non réduite du nuage des points observations associés à l'anomalie (voir l'ouvrage de G. Saporta cité plus haut).

Ayant évalué la direction dans laquelle les points associées à une cause spéciale s'éloigne du centre de la distribution des points sous contrôle, il est possible de définir deux indicateurs associés à cette anomalie :

- le premier mesure l'éloignement d'un point observation dans cette direction.
- le second mesure la proximité d'un point avec cette direction particulière dans l'espace $R^n$ d'observation, au sens de proximité angulaire, vu du centre de la distribution des points hors contrôle.

Dans l'espace multidimensionnel des observations, le premier indicateur mesure l'éloignement de l'observation dans la direction associée à cette cause spéciale. Il associe à chaque couple observation - anomalie un indicateur d'intensité de relation de l'observation à l'anomalie, appelée « variable cause », obtenu comme composante du point observation sur la direction associée à la cause, cet indicateur étant calculé comme un produit scalaire du vecteur observation avec le vecteur directeur de la direction de la cause.

En calculant ce produit scalaire dans l'espace dans composantes principales normées, cela revient à prendre, dans l'espace des mesures initiales, pour matrice de produit scalaire, la matrice $V^{-1}$ , $V^{-1}$ désignant la matrice inverse de la matrice de covariances V des données sous contrôle lorsque V est de plein rang, $V^{-1}$ désignant la matrice pseudo inverse de V si V n'est pas de plein rang

Cet indicateur est donc combinaison linéaire des mesures initiales, et dans l'hypothèse où celles-ci suivent une loi gaussienne (lorsque le processus est sous contrôle), cet indicateur suit également loi gaussienne ; on peut donc suivre son évolution à l'aide une carte de contrôle habituelle. Ainsi une observation située hors contrôle sur une telle carte intensité est fortement susceptible de correspondre au type d'anomalie que représente l'indicateur reporté sur cette carte.

Cependant, lorsqu'un point observation se trouve très éloigné du centre de la distribution des points sous contrôle, il peut apparaître éloigné dans plusieurs directions de cause et donc être associé à plusieurs types d'anomalies. Pour lever l'ambiguïté, on considère alors le deuxième indicateur.

Il s'agit d'un indicateur de proximité angulaire entre la direction représentant l'anomalie et le vecteur qui a pour origine le centre des données sous contrôle et pour extrémité le point observation. L'évaluation de cet angle peut être faite par le cosinus qui est facilement calculable : ce cosinus est calculé en divisant l'indicateur d'intensité précédent par la norme du vecteur représentant l'observation.

Fait dans l'espace des composantes principales normées, ce calcul est plus pertinent et il permet de définir des limites de contrôles que l'on peut porter sur une carte de contrôle portant sur ce nouvel indicateur.

En effet, en cas de fonctionnement sous contrôle, cet indicateur admet une distribution de probabilité dont on peut déterminer la fonction de répartition F.

On utilise cette fonction F pour définir la limite $L\alpha$ de contrôle de l'indicateur de proximité angulaire au-delà de laquelle une observation sera affectée à ladite anomalie, ladite fonction F représentant une fonction de répartition de la distribution du cosinus (X) de l'angle formé par une direction donnée quelconque de $R^n$, avec $n\geq=2$, et un vecteur aléatoire gaussien de $R^n$ centré, ayant la matrice identité pour matrice de covariance, ladite fonction de répartition F de cette variable aléatoire étant donnée par la formule suivante :

$$\text{si } x<-1 \qquad F(x) = 0$$

$$\text{si } x >1 \qquad F(x) = 1$$

$$\text{si } x < -1 \text{ et } \geq 1 \qquad F(x) = 1 - \frac{S(ArcCosinus(x))}{S(\pi)}$$

avec

$$S(\theta) = \int_{0}^{\theta} \sin^{n-2}(t)dt,$$

, de sorte que $L\alpha=F^{-1}(\alpha)$, $\alpha$ représentant le seuil toléré pour la probabilité de fausse alerte, de préférence $\alpha$ représente une valeur allant de 0,001 et 0,05%. On entend ici par "fausse alerte" l'affectation erronée d'une observation sous contrôle à la dite anomalie.

L'examen de la carte de contrôle de proximité angulaire permettra de retenir, parmi les points déclarés hors contrôle par la carte "intensité", les points qui dépendent relèvent réellement de l'anomalie considérée : ils sont déclarés hors contrôle simultanément sur les deux cartes.

Dans la pratique, une telle carte de proximité angulaire est peu lisible car, pour le faible nombre de dimensions, les limites de contrôles sont très proches de 1 ou -1. C'est pourquoi on leur préfère des cartes représentant ces indicateurs après une transformation appropriée sur une carte exprimée en seuils de probabilité disposant d'une échelle logarithmique.

Ce mode de représentation peut être utile pour tout type de grandeurs à contrôler ; il permet une plus grande facilité d'interprétation et une homogénéité de présentation pour des cartes associées à différentes distributions de probabilité. Deux type de cartes sont définies :

- la carte unilatérale $P_u$ peut être utilisée lorsque le contrôle porte sur une seule limite (comme dans la carte du $T^2$)
- la carte bilatérale $P_b$ étant utilisée lorsque le contrôle porte sur une limite inférieure et une limite supérieure.

Soit à reporter une valeur x observation associée à l'indice i d'une distribution de fonction de répartition $F_x$ sur une carte unilatérale $P_u$. L'observation est alors repérée sur le graphique de la carte à l'abscisse i et l'ordonnée y = min(-$\log_{10}$(1-Fx(x)), 4 ).

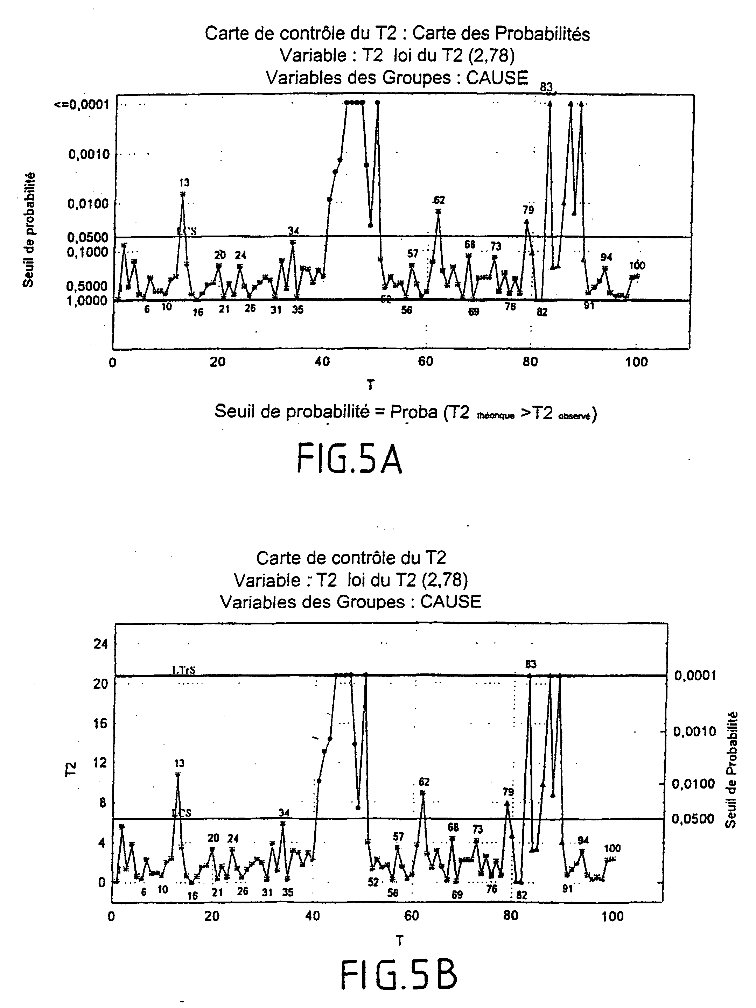

L'échelle des ordonnées est graduée par les valeurs de seuils associés aux valeurs entières de y : 1-$F_x$(x) = 10(-y). L'ordonnée 4 sur l'échelle est repérée par la mention "<0,0001" pour tenir compte de la troncation opérée. On marque par une ligne horizontale la limite de contrôle choisie. La figure 5 montre une carte de contrôle classique du $T^2$ et la carte $P_u$ correspondante.

Soit à reporter une valeur x observation associée à l'indice i d'une distribution de fonction de répartition $F_x$ sur une carte bilatérale $P_b$. L'observation est alors repérée sur le graphique de la carte à l'abscisse i et l'ordonnée y est définie par

$$\text{si } x < m \qquad y = min(-\log_{10}((1-F_x(x))\,*2), 4 )$$

$$\text{si } x > m \qquad y = - min(-\log_{10}(F_x(x)\,*2), 4 )$$

m désignant la médiane de la distribution ; Fx(m) = 0,5

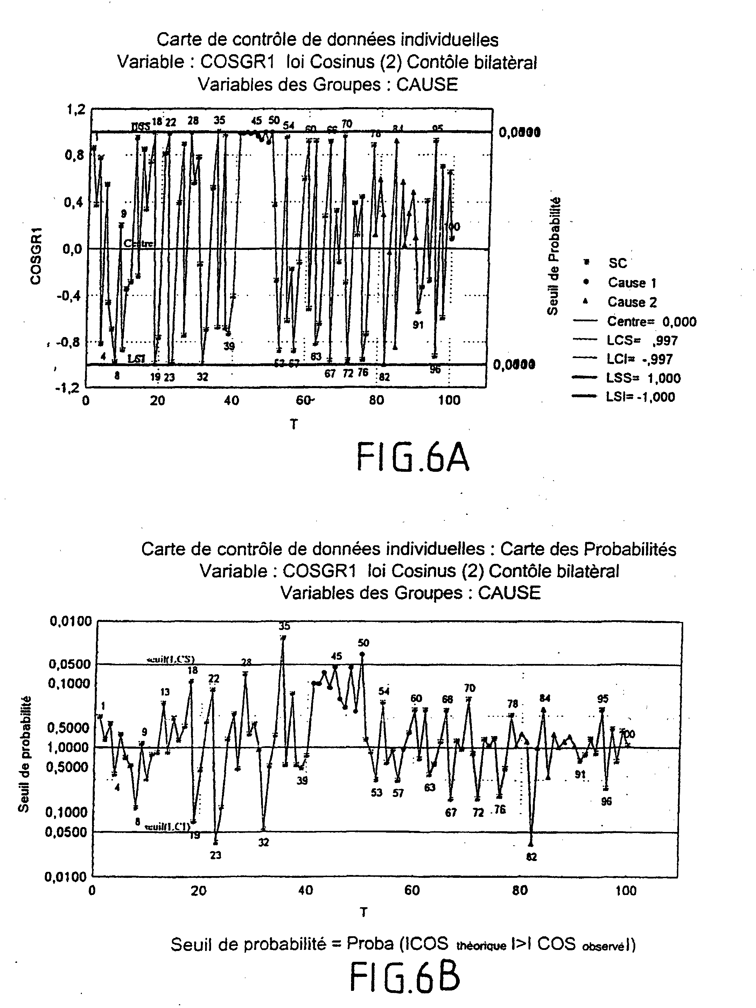

L'échelle des ordonnées est graduée par les valeurs de seuils associés aux valeurs entières de y : 10(- lyl). On marque par une ligne horizontale la limite de contrôle associée au seuil de contrôle choisi. La figure 6 montre une carte de contrôle classique du cosinus et la carte $P_b$, correspondante.

### A5- Interprétation des causes spéciales.

Les cartes de contrôle défini précédemment donnent des compléments d'information aux responsables du processus pour leur permettre de désigner tous les points de l'historique qui ne correspondent pas à un fonctionnement correct du processus, d'identifier pour chacun d'eux la cause réelle de l'anomalie. les outils décrits ci-dessus permettent alors d'associer à chaque cause d'anomalie répertoriée une direction dans l'espace observation et deux indicateurs permettant de l'identifier.

- La deuxième phase du procédé suivant l'invention, qui est celle de contrôle, comprend les étapes suivantes :

S1- on transforme préalablement les données.
S2- on détecte et on identifie les anomalies par le suivi de cartes de contrôle
S3- si besoin, on identifie une combinaison de causes ou une cause spéciale nouvelle et intégration dans le procédé.

Au cours de cette deuxième phase, le système reçoit les mesures et données en provenance du processus (depuis des capteurs par liaison directe, ou par saisie manuelle), mesures qui sont sur le modèle des mesures de l'historique analysé. Il permet alors le déclenchement d'alertes lorsque le processus se dérègle ; il précise alors la ou les causes probables du déréglement, causes choisies parmi celles qui ont été préalablement identifiées dans la phase d'apprentissage.

Chaque observation qui est reçue du processus est traitée en plusieurs étapes :

### S1- Transformation préalable des données.

Les données subissent les transformations qui ont été définies à l'étape A1.

### S2- Détection et identification d'anomalies

La valeur du $T^2$ associée à l'observation, selon le mode de calcul défini à l'étape A2 est calculée et repérée par rapport à la limite de contrôle de la carte du $T^2$.

Si, selon cette carte, l'observation est déclarée sous contrôle, le traitement de l'observation est terminé, sinon cela signifie que l'observation rend compte d'un disfonctionnement du processus.

Dans ce dernier cas, on calcule les valeurs prises par les indicateurs associés aux différentes causes répertoriées en phase d'apprentissage et l'on examine la position du point représentant la nouvelle observation sur les cartes de contrôles de type $P_b$ associées à ces indicateurs. Lorsque les deux indicateurs associés à une même cause déclarent l'observation hors contrôle, cette cause est retenue comme pouvant être à l'origine d'un dysfonctionnement actuel du processus ; le système transmet au pilote du processus l'alerte concernant le dysfonctionnement et le diagnostic sur l'origine du dysfonctionnement.

Le traitement de l'observation est alors terminé à moins qu'aucune cause répertoriée n'ait été reconnue et proposée par le système. Dans ce cas, une étape complémentaire suivante est nécessaire.

### S3-Si besoin, identification d'une combinaison de causes ou d'une cause spéciale nouvelle et intégration dans le système

Lorsqu'aucune cause n'est reconnue à l'étape précédente, on teste si l'anomalie constatée provient de l'apparition simultanée de deux causes connues.

Pour ce faire, on effectue une régression linéaire sans terme constant, de type "pas à pas" ou "meilleurs sous ensembles" en prenant le point observation centré sur le centre de la distribution sous contrôlé comme variable à expliquer, et les variables causes comme variables explicatives.

Si l'on obtient un coefficient de corrélation multiple R important, avec deux variables explicatives seulement, notamment R> à 0,95, on peut considérer qu'il y a occurrence simultanée des deux causes associées à ces variables. On peut de même considérer la possibilité d'occurrence simultanée de plus de deux causes, notamment trois ou quatre causes.

Lorsqu'aucune cause ou combinaison de causes répertoriée n'est reconnue, on est ramené à l'identification manuelle basée sur les connaissances et l'expérience des responsables du processus.

### Revendications

1. Procédé de maîtrise statistique de processus industriel à partir de relevés d'indicateurs ou de mesures de grandeurs caractéristiques des entrées, des sorties et des paramètres de contrôle et de fonctionnement dudit processus, et qui peuvent être représentés par des points observations dans des repères liant leur valeur à leur indice d'échantillonnage, lesdits indicateurs ou mesures étant relevés par des capteurs ou par saisie manuelle, **caractérisé en ce que** :

a) on transforme les valeurs observées de sorte que les valeurs obtenues soient compatibles avec le modèle de distribution gaussienne multidimensionnelle, et constituent les données correspondant aux points d'observation utilisées dans la suite du procédé,
b) on situe lesdits points observations dans un espace multidimensionnel, chaque dimension étant associée à une grandeur mesurée,
c) parmi les points observations, on distingue ceux dits sous contrôle correspondant au fonctionnement correct du processus, de ceux dits hors contrôle ;
d) on calcule le centre de la distribution des points sous contrôle comme étant le centre de gravité des points observations sous contrôle ;
e) on relève les points observations hors contrôle qui se concentrent dans une direction particulière à partir du centre de la distribution des points sous contrôle ;
f) on associe cette direction à une même cause de déréglage dudit processus,
g) on associe à chaque couple point observation / direction d'anomalie des indicateurs dans le but de proposer zéro, une ou plusieurs causes d'anomalie susceptibles de concerner l'observation faite, et

h) en cas d'anomalie ainsi analysée, on déclenche une alerte et on porte remède aux dérives ainsi détectées dans le processus industriel.

2. Procédé de maîtrise statistique de processus, suivant la revendication 1, **caractérisé en ce qu'**on associe à chaque couple observation - anomalie un indicateur d'intensité de relation de l'observation à l'anomalie, appelée « variable cause », obtenu comme composante du point observation sur la direction associée à la cause, cet indicateur étant calculé comme un produit scalaire du vecteur observation avec le vecteur directeur de la direction de la cause, la matrice du produit scalaire utilisé comme indicateur d'intensité de relation d'une observation à une anomalie étant la matrice $V^{-1}$ , $V^{-1}$ désignant la matrice, soit inverse de la matrice de covariances V des données sous contrôle lorsque V est de plein rang, soit pseudo inverse de V si V n'est pas de plein rang.

3. Procédé de maîtrise statistique de processus, suivant la revendication 2, **caractérisé en ce qu'**on utilise un indicateur de proximité entre une observation et une anomalie, appelée "indicateur de proximité angulaire" , obtenu par une mesure de l'angle que fait un vecteur représentant l'observation avec un vecteur représentant la direction associée à l'anomalie, l'indicateur de proximité angulaire étant le cosinus dudit angle, ce dit cosinus étant calculé en divisant l'indicateur d'intensité, par la norme du vecteur représentant l'observation, norme définie par ladite matrice $V^{-1}$.

4. Procédé de maîtrise statistique de processus, suivant la revendication 3, **caractérisé en ce qu'**on utilise une fonction F pour définir la limite $L\alpha$ de contrôle de l'indicateur de proximité angulaire au-delà de laquelle une observation sera affectée à ladite anomalie, ladite fonction F représentant une fonction de répartition de la distribution du cosinus (X) de l'angle formé par une direction donnée quelconque de $R^n$, avec $n \geq 2$, et un vecteur aléatoire gaussien de $R^n$ centré, ayant la matrice identité pour matrice de covariance, ladite fonction de répartition F de cette variable aléatoire étant donnée par la formule suivante :

$$\text{si } x < -1 \quad F(x) = 0$$

$$\text{si } x > 1 \quad F(x) = 1$$

$$\text{si } x \leq -1 \text{ et } \geq 1 \quad F(x) = 1 - \frac{S(ArcCosinus(x))}{S(\pi)}$$

avec

$$S(\theta) = \int_0^\theta \sin^{n-2}(t)dt$$

, de sorte que $L\alpha = F^{-1}(\alpha)$, $\alpha$ représentant le seuil toléré pour la probabilité de fausse alerte, de préférence $\alpha$ représente une valeur allant de 0,001 à 0,05%.

5. Procédé de maîtrise statistique de processus, suivant l'une quelconque des revendication 1 à 4, **caractérisé en ce qu'**il est organisé en:

- une phase d'apprentissage qui par l'analyse d'un historique du processus contribue à l'identification des cas d'anomalie à l'aide des étapes suivantes :

    A1; on transforme préalablement les données,
    A2; on sépare les mesures sous contrôle et hors contrôle,
    A3; on identifie les types de causes spéciales et les paramètres des directions associées, par une méthode de classification automatique des observations adaptée pour identifier les observations susceptibles d'être associées à une même anomalie, et qui permette de regrouper des points observations situés à proximité d'une même droite issue du centre de la distribution des observations sous contrôle.
    A4; on crée et on examine les cartes de contrôle sur les indicateurs de causes spéciales,
    A5; on interprète les causes spéciales,

- une phase de contrôle qui propose, pour chaque nouvelle observation des variables processus, de diagnostiquer si cette observation dépend d'une anomalie et si cela est, quelle est ou quelles sont les anomalies probables, ladite phase comprenant les trois étapes suivante

    S1; on transforme préalablement les données.
    S2; on détecte et on identifie les anomalies par le suivi de cartes de contrôle.
    S3; si besoin, on identifie une combinaison de causes ou une cause spéciale nouvelle et intégration dans le procédé.

**6.** Procédé de maîtrise statistique de processus, suivant les revendications 3 à 5 **caractérisé en ce qu'**on utilise la méthode de classification automatique de type classification ascendante hiérarchique admettant la valeur absolue du cosinus comme indice de similarité entre deux vecteurs observations et admettant le critère du lien maximum, appelé aussi critère du diamètre, pour diriger l'agrégation de groupes.

**7.** Procédé de maîtrise statistique de processus, suivant la revendication 5 **caractérisé en ce qu'**on utilise comme direction représentative d'une anomalie, dans l'étape A3 de la phase d'apprentissage, le premier axe d'inertie des points observations associés à ladite anomalie, axe passant par le centre de la distribution des observations sous contrôle, cet axe étant déterminé par l'analyse en composantes principales, non centrée et non réduite du nuage des points observations associés à l'anomalie, points centrés au préalable sur le centre de la distribution des points observations sous contrôle.

**8.** Procédé de maîtrise statistique de processus, suivant l'une quelconque des revendications 5 à 7 **caractérisé en ce qu'**on utilise des cartes de contrôles en seuils de probabilité avec échelle logarithmique, la carte unilatérale $P_u$ étant utilisée lorsque le contrôle porte sur une seule limite comme dans la carte du $T^2$ la carte bilatérale Pb étant utilisée lorsque le contrôle porte sur une limite inférieure et une limite supérieure, ces cartes permettant une plus grande facilité d'interprétation et une homogénéité de présentation pour des cartes associées à différentes distributions de probabilité.

**Claims**

**1.** A statistical method of controlling an industrial process on the basis of readings of indicators or measurement of magnitudes characteristic of inputs, outputs, and control and operating parameters of said process, and capable of being represented by observation points in frames of reference associating their values to their sampling indices, said indicators or measurements being given by sensors or by manual input, the method being **characterised in that**:

a) the observed values are transformed so that the resulting values are compatible with the multidimensional Gaussian distribution model, and constitute data corresponding to the observation points used in the remainder of the method;

b) said observation points are situated in a multidimensional space, in which each dimension is associated with a measured magnitude;

c) amongst the observation points, points that are said to be "under control" and that correspond to proper operation of the process are distinguished from points which are said to be "out of control";

d) the distribution centre of the points under control is calculated as being the centre of gravity of the observation points under control;

e) out of control observation points that are concentrated in some particular direction from the distribution centre of the points under control are identified;

f) this direction is associated with a common cause for drift of said process;

g) each observation point and anomaly direction pair is associated with indicators in order to propose zero, one, or more causes of anomaly that are liable to be associated with the observation that has been made; and

h) when an anomaly is analysed in this way, a waming is triggered and the drift detected in this way in the industrial process is remedied.

**2.** A statistical process control method according to claim 1, **characterised in that** each observation and anomaly pair is associated with an indicator giving the intensity of the relationship between the observation and the anomaly, referred to as the "cause variable", the indicator being obtained as the component of the observation point along the direction associated with the cause, said indicator being calculated as a scalar product of the observation vector multiplied by the direction vector for the direction of the cause, the scalar product matrix used as an indicator of the intensity of the relationship between an observation and an anomaly being the matrix $V^{-1}$ where $V^{-1}$ designates the matrix which is either the inverse of the covariance matrix V of the data under control when V is of full rank, or else the pseudo-inverse of V if V is not of full rank.

**3.** A statistical process control method according to claim 2, **characterised in that** a proximity indicator is used between an observation and an anomaly, referred to as an "angular proximity indicator", obtained by measuring the angle between a vector representing the observation and a vector representing the direction associated with the anomaly, the angular proximity indicator being the cosine of said angle, said cosine being calculated by dividing the intensity indicator by the norm of the vector representing the observation, which norm is defined by said matrix $V^{-1}$.

**4.** A statistical process control method according to claim 3, **characterised in that** a function F is used to define the control limit Lα of the angular proximity indicator beyond which an observation is allocated to said anomaly, said function *F* representing a distribution function of the cosine of the angle (x) between an arbitrary given direction of $R^n$, where $n \geq 2$, and a centred Gaussian random vector $R^n$ having the intensity matrix as its covariance matrix, said distribution function F of said random variable being given by the following formula:

$$\text{if } x < -1 \qquad F(x) = 0$$

$$\text{if } x > 1 \qquad F(x) = 1$$

$$\text{if } x \leq -1 \text{ and } \geq 1 \qquad F(x) = 1 - \frac{S(\text{ArcCos}(x))}{S(\pi)}$$

where

$$S(\theta) = \int_0^\theta$$

$\sin^{n-2}(t)dt$ such that $L\alpha = F^{-1}(\alpha)$, where $\alpha$ represents the acceptable probability for a false alarm, $\alpha$ preferably representing a value lying in the range 0.001% to 0.05%.

5. A statistical process control method according to any one of claims 1 to 4, **characterised in that** it is organised as:

 . a leaming stage which analyzes a history of the process to contribute to identifying anomalies by performing the following steps:

   A1; prior transformation of the data;
   A2; separation of measurements under control and out of control;
   A3; identifying the types of special causes and the associated direction parameters by a method of automatically classifying observations. that is adapted to identify observations that are likely to be associated with the same anomaly, and that enables observation points situated close to the same straight line coming from the distribution centre of the observations under control to be grouped together,
   A4; creating and examining control charts on the special cause indicators; and
   A5; interpreting the special causes;

 . a control stage proper which, for each new observation of the process variables, diagnoses whether the observation depends on an anomaly, and if so which anomaly(ies) is/are probable, said stage comprising the following three steps:

   S1; prior transformation of the data;
   S2; detecting and identifying anomalies by inspecting control charts; and
   S3; where necessary identifying a combination of causes or a new special cause and integrating that in the method.

6. A statistical process control method according to claims 3 to 5, **characterised in that** the automatic classification method used is of the hierarchical ascending classification type accepting the absolute value of the cosine as a similarity index between two observation vectors and accepting the maximum binding criterion also known as the diameter criterion for directing the making up of groups.

7. A statistical process control method according to claim 5, **characterised in that** the direction used in step A3 of the leaming stage to represent an anomaly is the first inertial axis of the observation points associated with said anomaly, which axis passes through the distribution centre of the under-control observations, said axis being determined by non-centred and non-reduced principal component analysis on the cloud of observation points associated with the anomaly, points previously centred on the distribution centre of the under-control observation points.

8. A statistical process control method according to any one of claims 5 to 7, **characterised in that** control charts are used having probability thresholds with a logarithmic scale, the unilateral chart $P_u$ being used when control relates to a single limit (as in the $T^2$ chart), the bilateral chart $P_b$ being used when control relates to a lower limit and an upper limit, said. charts providing easier interpretation and greater uniformity of presentation for charts associated with various probability distributions.

**Patentansprüche**

1. Verfahren zur statistischen Kontrolle von industriellen Prozessen anhand von Aufzeichnungen von Indikatoren oder Messungen von Größen, die für die Eingaben, Ausgaben und die Kontroll- und Funktionsparameter des Prozesses charakteristisch sind und die durch Beobachtungspunkte in Koordinaten dargestellt werden können, die einen Zusammenhang zwischen dem Wert und der Stichprobenkennzahl herstellen, wobei die Indikatoren oder Messungen durch Sensoren oder manuelle Erfassung aufgezeichnet werden,
**dadurch gekennzeichnet, dass**

    a) die beobachteten Werte so umgewandelt werden, dass die erzielten Werte mit dem Modell der mehrdimensionalen Normalverteilung kompatibel sind und die Daten bilden, die den im weiteren Verlauf des Prozesses verwendeten Beobachtungspunkten entsprechen,

    b) die Beobachtungspunkte in einem mehrdimensionalen Raum angeordnet werden, wobei jede Dimension einer gemessenen Größe zugeordnet ist,

    c) unter den Beobachtungspunkten die so genannten Punkte unter Kontrolle, die dem korrekten Ablauf des Prozesses entsprechen, von den so genannten Punkten außer Kontrolle unterschieden werden;

    d) der Mittelpunkt der Verteilung der Punkte unter Kontrolle berechnet wird, der der Schwerpunkt der Beobachtungspunkte unter Kontrolle ist;

    e) die Beobachtungspunkte außer Kontrolle aufgezeichnet werden, die sich ausgehenden vom Mittelpunkt der Verteilung der Punkte unter Kontrolle in einer bestimmten Richtung konzentrieren;

    f) diese Richtung ein und derselben Ursache für die Unregelmäßigkeit des Prozesses zugeordnet wird,

    g) jedem Paar Beobachtungspunkt / Abweichungsrichtung Indikatoren zugeordnet werden, um keine, eine oder mehrere Ursachen für die Abweichung vorzuschlagen, die sich auf die gemachte Beobachtung zu beziehen vermögen, und

    h) im Falle einer auf diese Weise analysierten Abweichung ein Alarm ausgelöst wird und die auf diese Weise in dem industriellen Prozess entdeckten Abweichungen behoben werden.

2. Verfahren zur statistischen Prozesskontrolle nach Anspruch 1, **dadurch gekennzeichnet, dass** jedem Paar Beobachtung - Abweichung ein Indikator für die Stärke des als "Ursachenvariable" bezeichneten Verhältnisses zwischen der Beobachtung und der Abweichung zugeordnet wird, der als Komponente des Beobachtungspunkts in der der Ursache zugehörigen Richtung erzielt wird, wobei der Indikator als ein Skalarprodukt des Beobachtungsvektors mit dem Richtungsvektor der Ursachenrichtung berechnet wird, wobei die Matrix des Skalarprodukts, das als Indikator für die Stärke des Verhältnisses zwischen einer Beobachtung und einer Abweichung verwendet wird, die Matrix $V^{-1}$ ist, wobei $V^{-1}$ entweder die inverse Matrix der Kovarianz-Matrix $V$ der Daten unter Kontrolle bezeichnet, wenn $V$ eine volle Zeile bildet, oder die pseudoinverse Matrix von $V$, wenn $V$ keine volle Zeile bildet.

3. Verfahren zur statistischen Prozesskontrolle nach Anspruch 2, **dadurch gekennzeichnet, dass** ein Näherungsindikator zwischen einer Beobachtung und einer Abweichung verwendet wird, der als "Winkelnäherungsindikator" bezeichnet wird und durch eine Messung des Winkels erzielt wird, den ein die Beobachtung darstellender Vektor mit einem die zugeordnete Abweichungsrichtung darstellenden Vektor bildet, wobei der Winkelnäherungsindikator der Kosinus des Winkels ist, wobei der Kosinus dadurch berechnet wird, dass der Indikator der Stärke durch die von der Matrix $V^{-1}$ gebildete Norm des die Beobachtung darstellenden Vektors dividiert wird.

4. Verfahren zur statistischen Prozesskontrolle nach Anspruch 3, **dadurch gekennzeichnet, dass** eine Funktion F zum Definieren der Grenze $L\alpha$ zur Kontrolle des Winkelnäherungsindikators verwendet wird, ab der der Abweichung eine Beobachtung zugeordnet wird, wobei die Funktion F eine Verteilungsfunktion zur Verteilung des Kosinus (X) des Winkels darstellt, der durch eine beliebige gegebene Richtung R" mit $n \geq = 2$ und einem mittigen Gaußschen Zufallsvektor R" gebildet ist, und die Erkennungsmatrix als Kovarianz-Matrix hat, wobei die Verteilungsfunktion F dieser Zufallsvariablen durch folgende Formel gegeben ist:

$$\text{wenn } x < -1 \qquad F(s) = 0$$

$$\text{wenn } x > 1 \qquad F(x) = 1$$

$$\text{wenn } x \leq -1 \text{ und} \geq 1 \qquad F(x) = 1 - \frac{S(\arccos(x))}{S(\pi)}$$

mit

$$S(\theta) = \int_{0}^{\theta} \sin^{n-2}(t)\, dt$$

, so dass $L\alpha = F^1(\alpha)$, wobei $\alpha$ die für die Wahrscheinlichkeit eines Fehlalarms zulässige Grenze darstellt und $\alpha$ vorzugsweise einen Wert von 0,001 bis 0,05 % darstellt.

5. Verfahren zur statistischen Prozesskontrolle nach einem der Ansprüche 1 bis 4, **dadurch gekennzeichnet, dass** es sich gliedert in:

    - eine Lernphase, die durch Analyse einer Prozesshistorie zur Erkennung von Abweichungsfällen mit Hilfe der folgenden Schritte beiträgt:

A1; die Daten werden zunächst umgewandelt,

A2; die Messungen unter Kontrolle und außer Kontrolle werden getrennt,

A3; die Arten der speziellen Ursachen und die Parameter der zugehörigen Richtungen werden durch eine Methode zur automatischen Klassifizierung der Beobachtungen identifiziert, die dazu geeignet ist, die Beobachtungen zu identifizieren, die ein und derselben Abweichung zugeordnet werden können, und die es erlaubt, Beobachtungspunkte zusammenzufassen, die in der Nähe ein und derselben Geraden angeordnet sind, die vom Mittelpunkt der Verteilung der Beobachtungen unter Kontrolle ausgeht.

A4; die Karten zur Kontrolle der Indikatoren der speziellen Ursachen werden erzeugt und untersucht,

A5; die speziellen Ursachen werden interpretiert,

- eine Kontrollphase, die für jede neue Beobachtung von Verfahrensvariablen vorschläg, feststellen, ob diese Beobachtung von einer Abweichung abhängt und falls ja, um welche wahrscheinliche Abweichungen es sich hierbei handelt, wobei diese Phase die drei folgenden Schritte umfasst:

S1; die Daten werden zunächst umgewandelt,

S2; die Abweichungen werden durch die Überprüfung von Kontrollkarten erkannt und identifiziert,

S3; erforderlichenfalls wird eine Verknüpfung von Ursachen oder eine neue spezielle Ursache identifiziert und in das Verfahren integriert.

**6.** Verfahren zur statistischen Prozesskontrolle nach den Ansprüchen 3 bis 5, **dadurch gekennzeichnet, dass** die Methode zur automatischen Klassifizierung in der Art einer hierarchisch aufsteigenden Klassifizierung ist, die den Absolutwert des Kosinus als Richtwert der Ähnlichkeit zwischen zwei Beobachtungsvektoren zulässt und das Kriterium des maximalen Zusammenhangs, auch als Durchmesserkriterium bezeichnet, zum Steuern des Zusammenschlusses von Gruppen zulässt.

**7.** Verfahren zur statistischen Prozesskontrolle nach Anspruch 5, **dadurch gekennzeichnet, dass** als repräsentative Richtung einer Abweichung in Schritt A3 der Lernphase die erste, dieser Abweichung zugeordnete Trägheitsachse der Beobachtungspunkte verwendet wird, die durch den Mittelpunkt der Verteilung der Beobachtungen unter Kontrolle verläuft, wobei die Achse durch die Zerlegung in Hauptkomponenten bestimmt ist, die nicht mittig ausgerichtet und durch die Wolke der der Abweichung zugeordneten Beobachtungspunkte nicht eingeschränkt ist, welche vorab auf den Mittelpunkt der Verteilung der Beobachtungspunkte unter Kontrolle ausgerichtet sind.

**8.** Verfahren zur statistischen Prozesskontrolle nach den Ansprüchen 5 bis 7, **dadurch gekennzeichnet, dass** Karten zur Kontrolle von Wahrscheinlichkeitsgrenzen mit logarithmischem Maßstab verwendet werden, wobei die einseitige Karte $P_a$ verwendet wird, wenn die Kontrolle einer einzigen Grenze, wie bei der Karte des $T^2$, erfolgt, und die zweiseitige Karte $P_b$ verwendet wird, wenn die Kontrolle einer unteren und einer oberen Grenze erfolgt, wobei diese Karten für Karten, die unterschiedlichen Wahrscheinlichkeitsverteilungen zugeordnet sind, eine größere Interpretationsmöglichkeit und eine homogene Präsentation erlauben.

Caractéristiques
observées

Caractéristiques
observées

Paramètres
observés

Causes
d'anomalies

Causes
d'anomalies

Causes
d'anomalies

ENTREES

PROCESSUS

SORTIES

FIG.1

EP 1 116 150 B1

Carte de contrôle de données individuelles
Variable : Y1 loi normale (39.690 , 6.433)
Variables des Groupes : CAUSE

FIG.2A

Carte de contrôle de données individuelles
Variable : Y2 loi normale (49.966 , 8.490)
Variables des Groupes : CAUSE

FIG.2B

Nuage de points
Données simulées 1
(simgr1 sta. 16v°102c)

FIG.3

Nuage de points
Données simulées 1, composantes
principales
(simgr1 sta. 16v°102c)

FIG.4

Carte de contrôle du T2 : Carte des Probabilités
Variable : T2  loi du T2 (2,78)
Variables des Groupes : CAUSE

Seuil de probabilité = Proba (T2 théorique >T2 observé)

## FIG.5A

Carte de contrôle du T2
Variable : T2  loi du T2 (2,78)
Variables des Groupes : CAUSE

## FIG.5B

Carte de contrôle de données individuelles
Variable : COSGR1 loi Cosinus (2) Contôle bilatèral
Variables des Groupes : CAUSE

## FIG.6A

Carte de contrôle de données individuelles : Carte des Probabilités
Variable : COSGR1 loi Cosinus (2) Contôle bilatèral
Variables des Groupes : CAUSE

Seuil de probabilité = Proba (ICOS théorique I>I COS observé I)

## FIG.6B